# EUROPEAN PATENT APPLICATION

(11) **EP 4 815 351 A1**
(43) Date of publication of application: **30.09.2026**
(21) Application number: 24914783.6
(22) Date of filing: 24.07.2024
(51) Int. Cl.: H04L 1/00

(54) **RATE ADJUSTING METHOD AND NODE**

(30) Priority: 03.01.2024 CN 202410009215
(71) Applicant: ZTE CORPORATION, Shenzhen, Guangdong 518057 (CN)
(72) Inventor: ZHANG, Yuanbin, Shenzhen, Guangdong 518057 (CN); GU, Yuan, Shenzhen, Guangdong 518057 (CN)
(74) Representative: Brunazzi, Stefano
(86) International application number: PCT/CN2024/107383
(87) International publication number: WO 2025/145561

(57) **Abstract**

Provided in the embodiments of the present disclosure are a rate adjusting method and a node. The method comprises: acquiring a target code stream in the 256B/257B format; and adding or deleting a 257 idle code block to adapt the rate of the target code stream.

## Description

### Cross-Reference to Related Application

The present disclosure is based on and claims priority to Chinese Patent Application No. CN202410009215.3 filed on January 3, 2024, entitled "Rate Adaptation Method and Node", the entire disclosure of which is incorporated herein by reference.

### Technical Field

The present disclosure relates to the field of communications, and in particular, to a rate adaptation method and a node.

### Background

In the Institute of Electrical and Electronics Engineers (IEEE) 802.3 standard, high-rate services are rate-adapted based on 66b blocks. Each Media Access Control (MAC) packet is encoded to the 64B/66B format, including a start control block (denoted as S control block) and a terminate control block (denoted as T control block). After a MAC packet is encoded to the 64B/66B format, the MAC packet starts with an S control block and ends with a T control block. Since there are on average 12 bytes of Inter-Packet Gap (IPG) between MAC packets, part of the IPG is encoded into a 66b idle control block. In the IEEE 802.3 standard, rate adaptation is performed by inserting or deleting the 66b idle control block. For example, the 66b idle control block is deleted to reserve space for Alignment Marker (AM) or Flexible Ethernet (FlexE) overhead, so as to ensure that the total rate remains unchanged.

Different service layers are also defined in the industry for bearing Ethernet services, such as FlexE and Optical Transport Network (OTN). The rate of a service layer is higher than that of an Ethernet service. In the process of mapping an Ethernet service to a corresponding service layer container, rate adaptation is also implemented by inserting or deleting the 66b idle control block. Since the service layer container has a high rate, one or more 66b idle control blocks are inserted into the service layer container when there are insufficient Ethernet services.

As the data rate increases, the internal processing bus width of the device increases accordingly, so that more 66b blocks can be carried within a single bus transfer. Consequently, the implementation of rate adaptation based on 66b idle control blocks becomes increasingly complex, because the 66b idle control block may appear at any position among multiple 66b blocks within the bus width, leading to complicated data splicing issues.

In summary, no effective solution has been proposed for the problem of high implementation complexity of the rate adaptation mechanism for high-rate Ethernet with the increase of rate in the related art.

### Summary

Embodiments of the present disclosure provide a rate adaptation method and a node, so as to at least solve the problem of high implementation complexity of the rate adaptation mechanism for high-rate Ethernet with the increase of rate in the related art.

According to an embodiment of the present disclosure, a rate adaptation method is provided. The rate adaptation method includes: acquiring a 256B/257B format data stream; and performing rate adaptation on the 256B/257B format data stream by inserting or deleting 257b idle blocks.

According to another embodiment of the present disclosure, a node is provided. The node includes an acquiring module, configured to acquire a 256B/257B format data stream; and a rate adaptation module, configured to perform rate adaptation on the 256B/257B format data stream by inserting or deleting 257b idle blocks.

According to still another embodiment of the present disclosure, a computer-readable storage medium is further provided. A computer program is stored in the computer-readable storage medium, and the computer program, when executed by a processor, causes the processor to perform the operations of any foregoing method embodiment.

According to still another embodiment of the present disclosure, an electronic device is further provided, which includes a memory and a processor, wherein a computer program is stored in the memory, and the processor is configured to run the computer program to perform the operations of any foregoing method embodiment.

### Brief Description of the Drawings

Fig. 1 is a hardware structural block diagram for executing a rate adaptation method according to an embodiment of the present disclosure;
Fig. 2 is a flowchart of a rate adaptation method according to an embodiment of the present disclosure;
Fig. 3 is a processing flowchart of a source node according to an embodiment of the present disclosure;
Fig. 4 is a schematic diagram of a 257b idle block according to an embodiment of the present disclosure;
Fig. 5 is a schematic diagram of a 257b terminate block according to an embodiment of the present disclosure;
Fig. 6 is a first processing flowchart of an intermediate node according to an embodiment of the present disclosure;
Fig. 7 is a second processing flowchart of an intermediate node according to an embodiment of the present disclosure;
Fig. 8 is a third processing flowchart of an intermediate node according to an embodiment of the present disclosure;
Fig. 9 is a schematic diagram of a 257b error block according to an embodiment of the present disclosure; and
Fig. 10 is a block diagram of a node according to an embodiment of the present disclosure.

### Detailed Description of the Embodiments

The embodiments of the present disclosure will be described in detail below with reference to the accompanying drawings.

It should be noted that terms such as "first" and "second" used in the specification, claims and accompanying drawings of the present disclosure are adopted to distinguish similar objects, and are not intended to define a specific sequence or order.

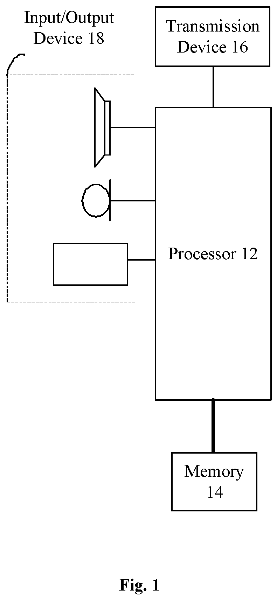

The method embodiments provided in the present disclosure can be implemented on a network node of high-speed Ethernet, such as a host node including computer equipment and server, a switch node, a router node, or a gateway node. Taking implementation on computer equipment as an example, Fig. 1 is a hardware structural block diagram for executing a rate adaptation method according to an embodiment of the present disclosure. As shown in Fig. 1, a hardware board may include one or more processors 12 (only one is illustrated in the figure). The processor 12 may be a Microcontroller Unit (MCU), a programmable logic device or other processing components, and a memory 14 for data storage. The computer equipment may further include a transmission device 16 for communication and an input and output device 18. Those skilled in the art can understand that the structure shown in Fig. 1 is merely illustrative and shall not be construed as limitation on the structure of the computer equipment. The computer equipment may be equipped with more or fewer components or adopt different configurations.

The memory 14 can store computer programs, such as software programs and modules of application software, including the computer program corresponding to the rate adaptation method in the embodiments of the present disclosure. The processor 12 runs the computer program stored in the memory 14 to implement various functional applications and the rate adaptation method. The memory 14 may include high-speed random access memory and non-volatile memory, such as one or more magnetic storage devices, flash memory, or other non-volatile solid-state memories. In some embodiments, the memory 14 may further include a remote memory arranged away from the processor 12, which can be connected to the computer equipment via a network. Examples of the network include but are not limited to the Internet, intranet, local area network, mobile communication network, and combinations thereof.

The transmission device 16 is configured to receive and transmit data via a network. The network may be a wireless network provided by a communication service provider. In one embodiment, the transmission device 16 includes a Network Interface Controller (NIC), which can be connected to other network devices through a base station to communicate with the Internet. In another embodiment, the transmission device 16 can be a Radio Frequency (RF) module configured to perform wireless communication with the Internet.

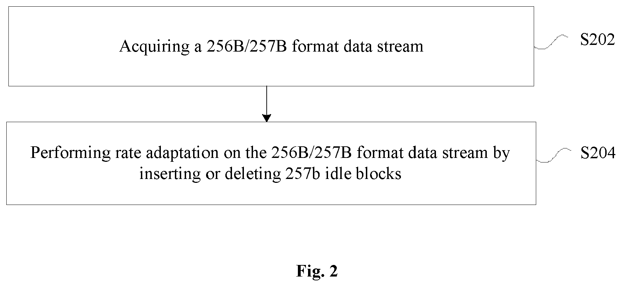

An embodiment of the present disclosure provides a rate adaptation method. Fig. 2 is a flowchart of a rate adaptation method according to an embodiment of the present disclosure. As shown in Fig. 2, the flow includes the following operations S202 and S204.

In operation S202, a 256B/257B format data stream is acquired.

In operation S204, rate adaptation is performed on the 256B/257B format data stream by inserting or deleting 257b idle blocks.

In the embodiments of the present disclosure, rate adaptation can be implemented based on the 257b data stream through operation S202 and operation S204, which reduces hardware implementation complexity of rate adaptation under high-speed interfaces. The rate adaptation method solves the problem of high implementation complexity of the rate adaptation mechanism for high-rate Ethernet with the increase of rate in the related art, and better supports the development of higher-speed Ethernet technologies.

In some embodiments, operation S204 of performing rate adaptation on the 256B/257B format data stream by inserting or deleting 257b idle blocks includes: inserting at least one 257b idle block after a 257b terminate block or a 257b idle block in the 256B/257B format data stream; or deleting at least one 257b idle block from the 256B/257B format data stream.

In this embodiment, adopting 257b idle blocks as basic units for data stream rate adaptation lowers the hardware implementation complexity of the rate adaptation mechanism. Deleting at least one 257b idle block from the 256B/257B format data stream increases the data stream rate, while inserting at least one new 257b idle block decreases the data stream rate.

In some embodiments, the 256B/257B format data stream includes multiple 257b blocks, and each 257b block is formed by performing 256B/257B transcoding on four 66b blocks.

In some embodiments, the 257b idle block (denoted as I) is transcoded from four 66b idle control blocks. The 257b terminate block (denoted as T) is transcoded from a first number of 66b data blocks (denoted as D), one 66b terminate control block (denoted as T), and a second number of 66b idle control blocks (denoted as I). The first number and the second number are greater than or equal to zero, and a sum of the first number and the second number is equal to 3.

In an exemplary embodiment, each 257b block can be represented by symbols of four 66b blocks. Combination modes of the four 66b blocks inside the 257b terminate block include TIII, DTII, DDTI and DDDT.

In some embodiments, before performing rate adaptation on the 256B/257B format data stream by inserting or deleting 257b idle blocks in operation S204, the rate adaptation method further includes: identifying 257b idle blocks in the 256B/257B format data stream based on a first pattern.

Exemplarily, the first pattern includes: the 1st bit being 0, the 2nd to 5th bits being 0000, and a first preset pattern. The first preset pattern includes at least one of: the 6th to 9th bits being 0111, and the 10th to 65th bits all being 0; or the 6th to 13th bits being 01110000.

In some embodiments, before performing rate adaptation on the 256B/257B format data stream by inserting or deleting 257b idle blocks in operation S204, the rate adaptation method further includes: identifying the 257b terminate block in the 256B/257B format data stream based on a second pattern.

Exemplarily, the second pattern includes at least one of the following:
the 1st bit being 0, the 2nd to 5th bits being 0000, and the 6th to 9th bits being a preset type;
the 1st bit being 0, and the 2nd to 5th bits being 1000 or 1110; or
the 1st bit being 0, the 2nd to 5th bits being 1100, and the 202nd to 257th bits all being 0.

In some embodiments, the 257b blocks further include a 257b start block. The 257b start block is transcoded from one 66b start control block and three 66b data blocks. Exemplarily, the 257b start block can be denoted as SDDD.

In some embodiments, the 257b blocks further include one or more 257b connect blocks. Each 257b connect block is transcoded from one 66b terminate control block, one 66b start control block, and two 66b data blocks, and the 66b terminate control block is located before the 66b start control block.

In some embodiments, the 257b connect block is transcoded from any one of the following combinations:
a 66b data block, a 66b data block, a 66b terminate control block and a 66b start control block;
a 66b data block, a 66b terminate control block, a 66b start control block and a 66b data block; or
a 66b terminate control block, a 66b start control block, a 66b data block and a 66b data block.

In an exemplary embodiment, the 257b connect block can be represented as DDTS, DTSD or TSDD. The 257b connect block is used for connecting two data packets. The T block inside the 257b connect block serves as the tail part of the previous data packet, and the S block serves as the head part of the subsequent data packet.

In some embodiments, operation S202 of acquiring the 256B/257B format data stream includes: performing 64B/66B encoding on Ethernet Media Access Control (MAC) packets to obtain a first 64B/66B format data stream, and performing 256B/257B transcoding on the first 64B/66B format data stream to obtain the 256B/257B format data stream.

In some other embodiments, operation S202 of acquiring the 256B/257B format data stream includes: receiving the 256B/257B format data stream sent by a previous node, wherein the 256B/257B format data stream is formed by performing 64B/66B encoding and then 256B/257B transcoding on Ethernet Media Access Control (MAC) packets.

In some embodiments, when performing 64B/66B encoding on the Ethernet MAC packets, Inter-Packet Gap (IPG) bytes in the Ethernet MAC packets are not encoded into 66b idle control blocks, wherein the first 64B/66B format data stream includes 66b start control blocks, 66b data blocks, and 66b terminate control blocks, and the first 64B/66B format data stream does not include the 66b idle control blocks.

In the embodiment, each Ethernet MAC packet may be transcoded into a group of 66b blocks, wherein each group of 66b blocks includes one 66b start control block (denoted as S), several 66b data blocks (denoted as D) and one 66b terminate control block (denoted as T), without containing any 66b idle control blocks (denoted as I).

Exemplarily, eight consecutive Inter-Packet Gap (IPG) bytes will not be encoded into one 66b idle control block during 64B/66B encoding of Ethernet MAC packets.

In some embodiments, performing 256B/257B transcoding on the first 64B/66B format data stream to obtain the 256B/257B format data stream includes: transcoding a 66b terminate control block of a current Ethernet MAC packet and a 66b start control block of a next Ethernet MAC packet in the first 64B/66B format data stream into one 257b connect block, wherein the 257b connect block does not include a 66b idle control block.

In some embodiments, performing 256B/257B transcoding on the first 64B/66B format data stream to obtain the 256B/257B format data stream includes: in a case where the number of remaining 66b blocks of a current Ethernet MAC packet in the first 64B/66B format data stream is less than 4 and a next Ethernet MAC packet is not received, inserting at least one 66b idle control block after a 66b terminate control block corresponding to the current Ethernet MAC packet, and then performing 256B/257B transcoding, so as to obtain a 257b terminate block in the 256B/257B format data stream.

In some embodiments, in a case where the number of remaining 66b blocks of a current Ethernet MAC packet in the first 64B/66B format data stream is less than 4 and a next Ethernet MAC packet is received, two Ethernet MAC packets are connected via a 257b connect block. The 257b connect block can be transcoded from the remaining 66b blocks of the current MAC packet and the first one or more 66b blocks of the subsequent MAC packet.

In some embodiment, performing 256B/257B transcoding on the first 64B/66B format data stream to obtain the 256B/257B format data stream further includes: in a case where a next Ethernet MAC packet is not received within a preset first time threshold after transcoding of a current Ethernet MAC packet in the first 64B/66B format data stream is completed, inserting a 257b idle block into the 256B/257B format data stream, wherein the 257b idle block is transcoded from four 66b idle control blocks.

In an exemplary embodiment, the first time threshold may be set according to time consumed for transmitting four 66b blocks.

In some embodiments, receiving the 256B/257B format data stream sent by the previous node includes: receiving a data stream sent by the previous node, wherein the data stream is obtained by performing Forward Error Correction (FEC) encoding on the 256B/257B format data stream; performing FEC decoding on the data stream to obtain the 256B/257B format data stream; and in a case where an uncorrectable FEC error occurs, replacing all 257b blocks within a corresponding FEC codeword in the 256B/257B format data stream with 257b error blocks.

In some embodiments, the FEC codeword has a length of 255 bytes, consisting of 239 bytes of valid data and 16 bytes of redundant overhead. If decoding of any FEC codeword fails, all 257b blocks contained in this FEC codeword shall be replaced with 257b error blocks.

In some embodiments, each 257b error block is transcoded from four 66b error control blocks.

In some embodiments, the 257b error block can be identified based on a preset third pattern. Exemplarily, the third pattern includes: the 1st bit being 0, the 2nd to 5th bits being 0000, and a second preset pattern. The second preset pattern includes at least one of: the 6th to 9th bits being 0111, and the 10th to 65th bits being eight segments of 0111100; or the 6th to 13th bits being 01110111.

In some embodiments, in a case where a current node is an intermediate node supporting switching based on 257b blocks, operation S204 of performing rate adaptation on the 256B/257B format data stream by inserting or deleting 257b idle blocks includes: performing switching on the 256B/257B format data stream based on the 257b blocks to obtain a switched 256B/257B format data stream; and performing rate adaptation on the switched 256B/257B format data stream by inserting or deleting 257b idle blocks.

In some embodiments, in a case where a current node is an intermediate node supporting switching based on 66b blocks, operation S204 of performing rate adaptation on the 256B/257B format data stream by inserting or deleting 257b idle blocks includes: transcoding the 256B/257B format data stream to obtain a second 64B/66B format data stream, wherein the second 64B/66B format data stream includes one or more 66b idle control blocks; performing switching on the second 64B/66B format data stream based on the 66b blocks to obtain a switched second 64B/66B format data stream; performing rate adaptation on the switched second 64B/66B format data stream by inserting or deleting at least one 66b idle control block to obtain a rate-adapted second 64B/66B format data stream; and transcoding the rate-adapted second 64B/66B format data stream into the 256B/257B format, and performing shifting, inserting, or deleting on at least one 66b idle control block in the rate-adapted second 64B/66B format data stream during the transcoding to obtain a rate-adapted 256B/257B format data stream in the 256B/257B format, wherein types of 257b blocks in the rate-adapted 256B/257B format data stream are consistent with types of 257b blocks in the 256B/257B format data stream.

In some embodiments, in a case where a current node is an intermediate node supporting switching based on 66b blocks, operation S204 of performing rate adaptation on the 256B/257B format data stream by inserting or deleting 257b idle blocks includes: deleting part of 257b idle blocks in the 256B/257B format data stream according to a preset proportional coefficient to obtain a rate-reduced 256B/257B format data stream; transcoding the rate-reduced 256B/257B format data stream to obtain a second 64B/66B format data stream, wherein the second 64B/66B format data stream includes one or more 66b idle control blocks; performing switching on the second 64B/66B format data stream based on the 66b blocks to obtain a switched second 64B/66B format data stream; transcoding the switched second 64B/66B format data stream into the 256B/257B format to obtain a switched 256B/257B format data stream; and performing rate adaptation on the switched 256B/257B format data stream by inserting or deleting 257b idle blocks.

The embodiments of the present disclosure realize a rate adaptation mechanism based on the 257b data stream, reduce hardware implementation complexity of rate adaptation under high-speed interfaces, resolve the problem of high implementation complexity of the rate adaptation mechanism for high-rate Ethernet with the increase of rate in the related art, and favorably facilitate the advancement of high-speed Ethernet technologies.

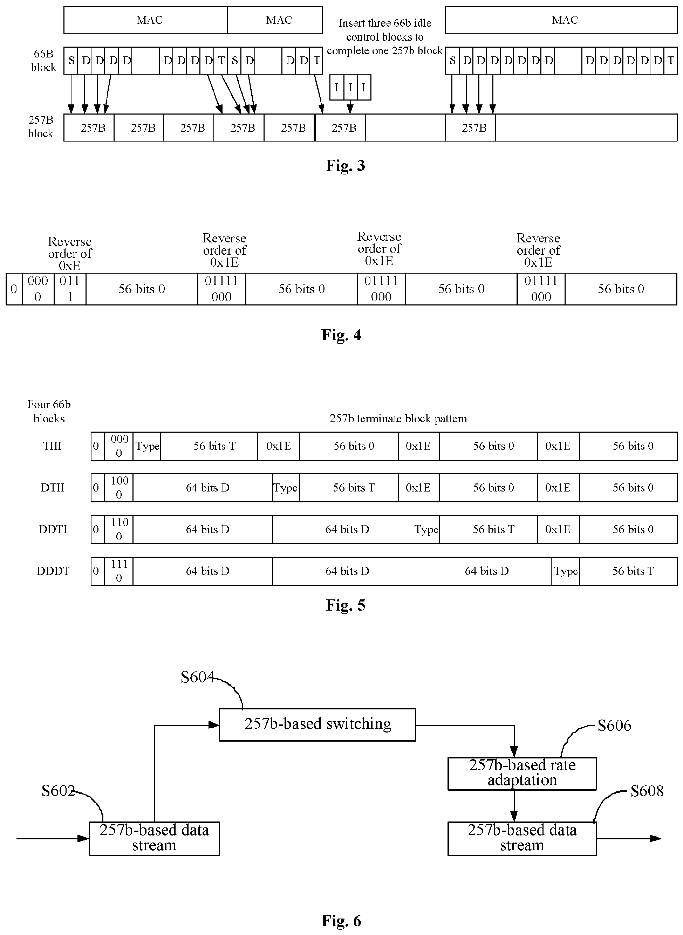

Fig. 3 is a processing flowchart of a source node according to an embodiment of the present disclosure. As shown in Fig. 3, Ethernet MAC packets can be encoded into a 64B/66B format and then transcoded into a 256B/257B format at the source node.

In this embodiment, each Ethernet MAC packet is encoded into a 64B/66B format consisting of a 66b start control block (denoted as S), a plurality of 66b data blocks (denoted as D) and a 66b terminate control block (denoted as T). The 64B/66B data stream obtained by encoding the Ethernet MAC packets contains no 66b idle control blocks. That is to say, eight consecutive IPG bytes will not be encoded into the 66b idle control block during encoding.

In this embodiment, four 66b blocks are transcoded into one 257b block in 256B/257B transcoding.

In some embodiments, during transcoding from 64B/66B to 256B/257B, if the number N1 of remaining 66b blocks of a current MAC packet that has been encoded into 64B/66b blocks is insufficient to form a 257b block and a subsequent MAC packet is received, the remaining 66b blocks of the current MAC packet and M1 66b blocks obtained by encoding the subsequent MAC packet are transcoded into one 257b block, where N1+M1=4. Exemplarily, when one 66b terminate control block (denoted as T) remains when the 66b blocks of the current MAC packet undergo 256B/257B transcoding and a subsequent MAC packet is received, the remaining T block of the current MAC packet and three corresponding 66b blocks (including one S block and two D blocks) of the subsequent MAC block are transcoded into one 257b block. In other words, when the T block of the current MAC packet and the S block of the subsequent MAC packet are jointly transcoded into one 257b block, the four 66b blocks constituting the 257b block contain no 66b idle control blocks.

In other embodiments, if the number N2 of remaining 66b blocks of a MAC packet that has been encoded into 64B/66b blocks is insufficient to form a 257b block and no subsequent MAC packet is received, a certain number M2 of 66b idle control blocks are inserted after the T block corresponding to the MAC packet, and the inserted 66b idle control blocks together with the remaining 66b blocks are transcoded into one 257b block. The sum of the number M2 of inserted 66b idle control blocks and the number N2 of remaining 66b blocks of the current MAC packet is equal to 4. Exemplarily, when two 66b blocks including a D block and a T block remain when the 66b blocks of the current MAC packet undergo 256B/257B transcoding, and no subsequent MAC packet is received, two 66b idle control blocks are inserted after the T block of the current MAC packet, and the inserted idle blocks together with the remaining D block and T block are transcoded into one 257b block.

In some embodiments, if no subsequent MAC packet is received within a first time threshold after the current MAC packet is completely transcoded into a 257b block, four 66b idle control blocks are inserted and transcoded into one 257b idle block. The first time threshold is a fixed preset value. Exemplarily, the first time threshold can be set as the transmission time corresponding to four 66b blocks.

The embodiments of the present disclosure realize conversion of MAC packets into the 256B/257B format, laying a foundation for a subsequent node to perform rate adaptation based on 257b idle blocks, thereby supporting the development of higher-speed Ethernet technologies.

In some embodiments, transcoded 257b blocks include at least one of the following types:
a 257b start block, which is transcoded from one 66b start control block (denoted as S) and three 66b data blocks (denoted as D);
a 257b terminate block, which consists of a1 (a first number) 66b data blocks (denoted as D), one 66b terminate control block (denoted as T) and a2 (a second number) 66b idle control blocks (denoted as I), where a1≥0, a2≥0, and a1+a2=3;
a 257b idle block, which is transcoded from four 66b idle control blocks;
a 257b data block, which is transcoded from four 66b data blocks;
a 257b error block, which is transcoded from four 66b error control blocks;
a 257b ordered block, which is transcoded from four 66b ordered blocks (denoted as O); or
a 257b connect block, which is transcoded from one 66b terminate control block (denoted as T), one 66b start control block (denoted as S) and two 66b data blocks (denoted as D), wherein the 66b terminate control block (denoted as T) is located before the 66b start control block (denoted as S).

In this embodiment, when rate adaptation is implemented by inserting at least on 257b idle block into a transcoded 257b data stream, the at least one 257b idle block is inserted after a 257b terminate block or a 257b idle block.

Fig. 4 is a schematic diagram of a 257b idle block according to an embodiment of the present disclosure. As shown in Fig. 4, the 257b idle block is transcoded from four 66b idle control blocks and identified based on a first pattern.

In this embodiment, the first pattern is defined as follows: the 1st bit of the 257b block is 0, the 2nd to 5th bits are 0000, and a first fixed pattern is satisfied. The first fixed pattern includes at least one of the following patterns: the 6th to 9th bits are 0111 (reverse order of 0xE) and the 10th to 65th bits are all zero; or the 6th to 13th bits are 01110000 (reverse order of 0x1E).

Fig. 5 is a schematic diagram of a 257b terminate block according to an embodiment of the present disclosure. As shown in Fig. 5, there are four types of 257b terminate blocks.

In this embodiment, the 257b terminate block includes a1 (a first number) 66b data blocks, one 66b terminate control block and a2 (a second number) 66b idle control blocks, where a1≥0, a2≥0, and a1+a2=3. The 66b terminate control block can be arranged at any position inside the 257b block, and is located after the a1 66b data blocks and before the a2 66b idle control blocks.

In the embodiment, combination modes of four 66b blocks inside the 257b terminate block include TIII, DTII, DDTI and DDDT.

The 257b terminate block is identified through a second pattern. The second pattern is defined as follows: the 1st bit of the 257b block is 0, the 2nd to 5th bits are 0000, and the 6th to 9th bits are fixed Type values.

In some embodiments, the fixed Type includes any one of the following values: 1001 (reverse order of 0x9), 0101 (reverse order of 0xA), 0010 (reverse order of 0x4), 0011 (reverse order of 0xC), 0100 (reverse order of 0x2), 1000 (reverse order of 0x1), or 1111 (reverse order of 0xF).

In some embodiments, the second pattern is defined as follows: the 1st bit of the 257b block is 0 and the 2nd to 5th bits are 1000 or 1110. Alternatively, the second pattern is defined as follows: the 1st bit of the 257b block is 0, the 2nd to 5th bits are 1100, and the 202nd to 257th bits are all zero.

Fig. 6 is a first processing flowchart of an intermediate node according to an embodiment of the present disclosure. As shown in Fig. 6, the flow includes the following operations S602 to S608.

In operation S602, a 257b-based data stream is received from an upstream node.

In operation S604, switching is performed based on 257b blocks.

In operation S606, rate adaptation is performed based on 257b blocks.

In operation S608, the 257b-based data stream is sent to a downstream node.

This embodiment applies to scenarios where the intermediate node supports switching based on 257b blocks. The intermediate node receives a 257b data stream from the upstream node and conducts switching of 257b blocks. After switching, rate adaptation is realized by inserting at least one 257b idle block after a 257b terminate block or an existing 257b idle block, or deleting at least one 257b idle block from the 257b data stream. The 257b terminate block is identified based on the second pattern, and the 257b idle block is identified based on the first pattern.

This embodiment reduces hardware implementation complexity of rate adaptation under high-speed interfaces, solves the problem of high implementation complexity of the rate adaptation mechanism for high-rate Ethernet with the increase of rate in the related art, and better facilitates the development of higher-speed Ethernet technologies.

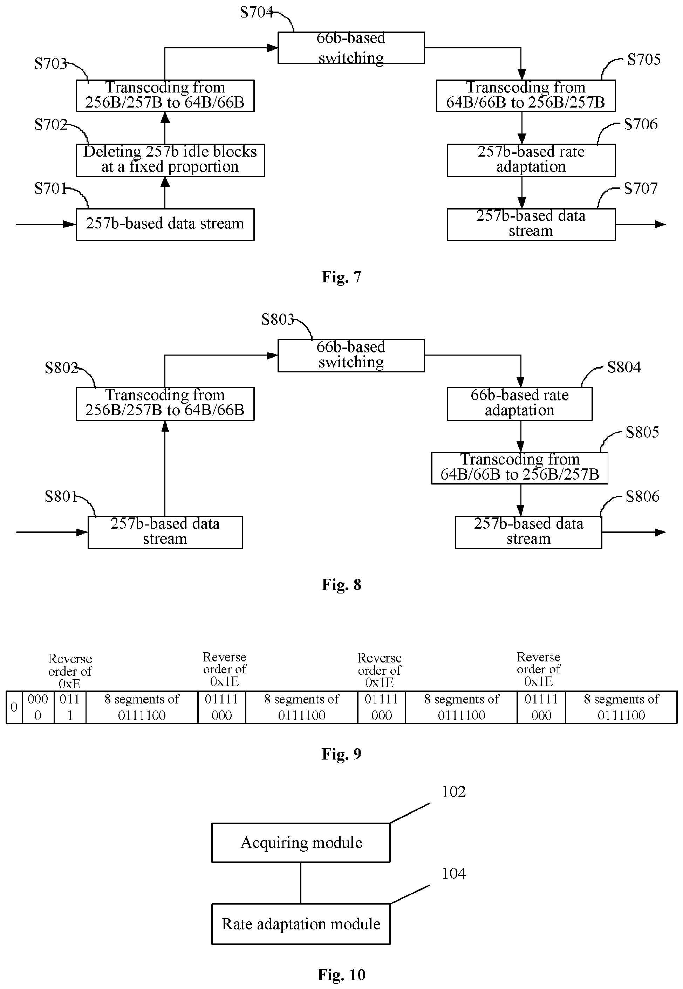

Fig. 7 is a second processing flowchart of an intermediate node according to an embodiment of the present disclosure. As shown in Fig. 7, the flow includes the following operations.

In operation S701, a 257b-based data stream is received from an upstream node.

In operation S702, 257b idle blocks are deleted at a fixed proportion.

In operation S703, transcoding is performed from 256B/257B to 64B/66B.

In operation S704, switching is performed based on 66b blocks.

In operation S705, transcoding is performed from 64B/66B to 256B/257B.

In operation S706, rate adaptation is performed based on 257b blocks.

In operation S707, the 257b-based data stream is sent to a downstream node.

This embodiment applies to scenarios where the intermediate node supports switching based on 66b blocks. The intermediate node receives a 257b data stream from the upstream node and deletes 257b idle blocks at a fixed statistical proportion, namely deleting one 257b idle block every M 257b blocks. The fixed proportion refers to a statistical proportion, which means that, after statistical calculation within a certain period of time, one idle block is removed every M 257b blocks, so as to lower the transmission rate of the data stream by deleting the 257b idle blocks. The 257b blocks are then transcoded into 66b blocks to perform switching based on 66b blocks. The blocks are transcoded back into 257b blocks after the switching based on 66b blocks. Rate adaptation is then implemented by inserting at least one 257b idle block after a 257b terminate block or a 257b idle block, or removing at least one 257b idle block from the 257b data stream. The 257b terminate block is identified by the second pattern, and the 257b idle block is identified by the first pattern.

Fig. 8 is a third processing flowchart of an intermediate node according to an embodiment of the present disclosure. As shown in Fig. 8, the flow includes the following operations S801 to S806.

In operation S801, a 257b-based data stream is received from an upstream node.

In operation S802, transcoding is performed from 256B/257B to 64B/66B.

In operation S803, switching is performed based on 66b blocks.

In operation S804, rate adaptation is performed based on 66b blocks.

In operation S805, transcoding is performed from 64B/66B to 256B/257B.

In operation S806, the 257b-based data stream is sent to a downstream node.

This embodiment applies to scenarios where the intermediate node supports switching based on 66b blocks. The intermediate node receives a 257b data stream from the upstream node and transcodes 257b blocks into 66b blocks to perform switching based on 66b blocks. Rate adaptation is carried out after switching based on 66b blocks, and then the 66b blocks are transcoded back into 257b blocks. During transcoding from 66b to 257b, an adjustment operation including one of shifting, inserting or deleting is executed on 66b idle control blocks, ensuring that the type of transcoded 257b blocks remains consistent with that of the257b blocks transcoded by the source node.

Fig. 9 is a schematic diagram of a 257b error block according to an embodiment of the present disclosure. As shown in Fig. 9, the 257b error block is transcoded from four 66b error control blocks.

In this embodiment, the receiving side of any node needs to perform Forward Error Correction (FEC) decoding on the 257b block data stream. During the FEC decoding process, excessive bit errors may occur and fail to be fully corrected by FEC. In this case, all 257b blocks contained in the corresponding FEC codeword are marked as erroneous. The error marking operation is implemented by replacing each 257b block with a 257b error block.

The 257b error block is transcoded from four 66b error control blocks and identified based on a third pattern. Exemplarily, the third pattern is defined as follows: the 1st bit of the 257b block is 0, the 2nd to 5th bits are 0000, and a second fixed pattern is satisfied. The second fixed pattern includes at least one of the following patterns: the 6th to 9th bits are 0111 (reverse order of 0xE), and the 10th to 65th bits consist of eight segments of 0111100 (reverse order of 0011110); or the 6th to 13th bits are 01110111 (reverse order of 0x1E).

Another embodiment of the present disclosure further provides a node. The node is applied to Ethernet, especially high-speed Ethernet, so as to better support the development of higher-speed Ethernet technologies.

Fig. 10 is a block diagram of a node according to an embodiment of the present disclosure. As shown in Fig. 10, the node includes:
an acquiring module 102, configured to acquire a 256B/257B format data stream; and
a rate adaptation module 104, configured to perform rate adaptation on the 256B/257B format data stream by inserting or deleting 257b idle blocks.

In some embodiments, the rate adaptation module 104 includes an inserting module and a deleting module. The inserting module is configured to insert at least one 257b idle block after a 257b terminate block or a 257b idle block in the 256B/257B format data stream. The deleting module is configured to delete at least one 257b idle block from the 256B/257B format data stream.

In this embodiment, adopting 257b idle blocks as basic units for data stream rate adaptation lowers the hardware implementation complexity of the rate adaptation mechanism. Deleting at least one 257b idle block from the 256B/257B format data stream increases the data stream rate, while inserting at least one new 257b idle block decreases the data stream rate.

In some embodiments, the 256B/257B format data stream includes multiple 257b blocks, and each 257b block is formed by performing 256B/257B transcoding on four 66b blocks.

In some embodiments, the 257b idle block (denoted as I) is transcoded from four 66b idle control blocks. The 257b terminate block (denoted as T) is transcoded from a first number of 66b data blocks (denoted as D), one 66b terminate control block (denoted as T), and a second number of 66b idle control blocks (denoted as I). The first number and the second number are greater than or equal to zero, and a sum of the first number and the second number is equal to 3.

In an exemplary embodiment, each 257b block can be represented by symbols of four 66b blocks. Combination modes of the four 66b blocks inside the 257b terminate block include TIII, DTII, DDTI and DDDT.

In some embodiments, the node further includes an identifying module. The identifying module is configured to identify 257b idle blocks in the 256B/257B format data stream based on a first pattern before performing rate adaptation on the 256B/257B format data stream by inserting or deleting 257b idle blocks.

Exemplarily, the first pattern includes: the 1st bit being 0, the 2nd to 5th bits being 0000, and a first preset pattern. The first preset pattern includes at least one of: the 6th to 9th bits being 0111, and the 10th to 65th bits all being 0; or the 6th to 13th bits being 01110000.

In some embodiments, the identifying module is further configured to identify the 257b terminate block in the 256B/257B format data stream based on a second pattern before performing rate adaptation on the 256B/257B format data stream by inserting or deleting 257b idle blocks.

Exemplarily, the second pattern includes at least one of the following:
the 1st bit being 0, the 2nd to 5th bits being 0000, and the 6th to 9th bits being a preset type;
the 1st bit being 0, and the 2nd to 5th bits being 1000 or 1110; or
the 1st bit being 0, the 2nd to 5th bits being 1100, and the 202nd to 257th bits all being 0.

In some embodiments, the 257b blocks further include a 257b start block. The 257b start block is transcoded from one 66b start control block and three 66b data blocks. Exemplarily, the 257b start block can be denoted as SDDD.

In some embodiments, the 257b blocks further include one or more 257b connect blocks. Each 257b connect block is transcoded from one 66b terminate control block, one 66b start control block, and two 66b data blocks, and the 66b terminate control block is located before the 66b start control block.

In some embodiments, the 257b connect block is transcoded from any one of the following combinations:
a 66b data block, a 66b data block, a 66b terminate control block and a 66b start control block;
a 66b data block, a 66b terminate control block, a 66b start control block and a 66b data block; or
a 66b terminate control block, a 66b start control block, a 66b data block and a 66b data block.

In an exemplary embodiment, the 257b connect block can be represented as DDTS, DTSD or TSDD. The 257b connect block is used for connecting two data packets. The T block inside the 257b connect block serves as the tail part of the previous data packet, and the S block serves as the head part of the subsequent data packet.

In some embodiments, the acquiring module 102 includes a transcoding module and a receiving module. The transcoding module is configured to perform 64B/66B encoding on Ethernet Media Access Control (MAC) packets to obtain a first 64B/66B format data stream, and perform 256B/257B transcoding on the first 64B/66B format data stream to obtain the 256B/257B format data stream. The receiving module is configured to receive the 256B/257B format data stream sent by a previous node, wherein the 256B/257B format data stream is formed by performing 64B/66B encoding and then 256B/257B transcoding on Ethernet Media Access Control (MAC) packets.

In some embodiments, the first 64B/66B format data stream includes multiple 66b blocks including 66b start control blocks, 66b data blocks, and 66b terminate control blocks, and the first 64B/66B format data stream does not include the 66b idle control blocks.

In the embodiment, each Ethernet MAC packet may be transcoded into a group of 66b blocks, wherein each group of 66b blocks includes one 66b start control block (denoted as S), several 66b data blocks (denoted as D) and one 66b terminate control block (denoted as T), without containing any 66b idle control blocks (denoted as I).

Exemplarily, eight consecutive Inter-Packet Gap (IPG) bytes will not be encoded into one 66b idle control block during 64B/66B encoding of Ethernet MAC packets.

In this embodiment, the transcoding module is further configured to, in a case where the number of remaining 66b blocks of a current Ethernet MAC packet in the first 64B/66B format data stream is less than 4 and a next Ethernet MAC packet is not received, insert at least one 66b idle control block after a 66b terminate control block corresponding to the current Ethernet MAC packet, and then perform 256B/257B transcoding, so as to obtain a 257b terminate block in the 256B/257B format data stream.

In some embodiments, in a case where the number of remaining 66b blocks of a current Ethernet MAC packet in the first 64B/66B format data stream is less than 4 and a next Ethernet MAC packet is received, two Ethernet MAC packets are connected via a 257b connect block. The 257b connect block can be transcoded from the remaining 66b blocks of the current MAC packet and the first one or more 66b blocks of the subsequent MAC packet.

In some embodiments, the transcoding module is further configured to, in a case where a next Ethernet MAC packet is not received within a preset first time threshold after transcoding of a current Ethernet MAC packet in the first 64B/66B format data stream is completed, insert a 257b idle block into the 256B/257B format data stream, wherein the 257b idle block is transcoded from four 66b idle control blocks.

In some embodiments, the receiving module includes a receiving unit and a decoding unit. The receiving unit is configured to receive a data stream sent by the previous node, wherein the data stream is obtained by performing Forward Error Correction (FEC) encoding on the 256B/257B format data stream. The decoding unit is configured to perform FEC decoding on the data stream to obtain the 256B/257B format data stream; and in a case where an uncorrectable FEC error occurs, replace all 257b blocks within a corresponding FEC codeword in the 256B/257B format data stream with 257b error blocks.

In some embodiments, the FEC codeword has a length of 255 bytes, consisting of 239 bytes of valid data and 16 bytes of redundant overhead. If decoding of any FEC codeword fails, all 257b blocks contained in this FEC codeword shall be replaced with 257b error blocks.

In some embodiments, each 257b error block is transcoded from four 66b error control blocks.

In some embodiments, the 257b error block can be identified based on a preset third pattern. Exemplarily, the third pattern includes: the 1st bit being 0, the 2nd to 5th bits being 0000, and a second preset pattern. The second preset pattern includes at least one of: the 6th to 9th bits being 0111, and the 10th to 65th bits being eight segments of 0111100; or the 6th to 13th bits being 01110111.

In some embodiments, in a case where a current node is an intermediate node supporting switching based on 257b blocks, the rate adaptation module 104 includes:
a 257b switching unit, configured to perform switching on the 256B/257B format data stream based on the 257b blocks to obtain a switched 256B/257B format data stream; and
a 257b rate adaptation unit, configured to perform rate adaptation on the switched 256B/257B format data stream by inserting or deleting 257b idle blocks.

In some embodiments, in a case where a current node is an intermediate node supporting switching based on 66b blocks, the rate adaptation module 104 includes:
a 66b transcoding unit, configured to transcode the 256B/257B format data stream to obtain a second 64B/66B format data stream, wherein the second 64B/66B format data stream includes one or more 66b idle control blocks;
a 66b switching unit, configured to perform switching on the second 64B/66B format data stream based on the 66b blocks to obtain a switched second 64B/66B format data stream;
a 66b rate adaptation unit, configured to perform rate adaptation on the switched second 64B/66B format data stream by inserting or deleting at least one 66b idle control block to obtain a rate-adapted second 64B/66B format data stream; and
a 257b transcoding unit, configured to transcode the rate-adapted second 64B/66B format data stream into the 256B/257B format, and perform shifting, inserting, or deleting on at least one 66b idle control block in the rate-adapted second 64B/66B format data stream during the transcoding to obtain a rate-adapted 256B/257B format data stream in the 256B/257B format, wherein types of 257b blocks in the rate-adapted 256B/257B format data stream are consistent with types of 257b blocks in the 256B/257B format data stream.

In some embodiments, in a case where a current node is an intermediate node supporting switching based on 66b blocks, the rate adaptation module 104 includes:
a rate reducing unit, configured to delete part of 257b idle blocks in the 256B/257B format data stream according to a preset proportional coefficient to obtain a rate-reduced 256B/257B format data stream;
a 66b transcoding unit, configured to transcode the rate-reduced 256B/257B format data stream to obtain a second 64B/66B format data stream, wherein the second 64B/66B format data stream includes one or more 66b idle control blocks;
a 66b switching unit, configured to perform switching on the second 64B/66B format data stream based on the 66b blocks to obtain a switched second 64B/66B format data stream;
a 257b transcoding unit, configured to transcode the switched second 64B/66B format data stream into the 256B/257B format to obtain a switched 256B/257B format data stream; and
a 257b rate adaptation unit, configured to perform rate adaptation on the switched 256B/257B format data stream by inserting or deleting 257b idle blocks.

The embodiments of the present disclosure realize a rate adaptation mechanism based on the 257b data stream, reduce hardware implementation complexity of rate adaptation under high-speed interfaces, resolve the problem of high implementation complexity of the rate adaptation mechanism for high-rate Ethernet with the increase of rate in the related art, and favorably facilitate the advancement of high-speed Ethernet technologies.

The embodiments of the present disclosure further provide a computer-readable storage medium storing a computer program therein. The computer program, when executed by a processor, causes the processor to perform the operations of any foregoing method embodiment.

In an exemplary embodiment, the computer-readable storage medium includes but is not limited to a Universal Serial Bus (USB) flash drive, Read-Only Memory (ROM), Random Access Memory (RAM), mobile hard disk, magnetic disk, optical disc, and other media capable of storing computer programs.

The embodiments of the present disclosure further provide an electronic device including a memory and a processor. The memory stores a computer program, and the processor is configured to run the computer program to execute the operations of any foregoing method embodiment.

In an exemplary embodiment, the electronic device further includes a transmission device and an input and output device. The transmission device is connected with the processor, and the input and output device is connected with the processor.

For specific examples in this embodiment, reference may be made to the examples described in the above embodiments and exemplary implementations, which will not be elaborated herein.

Apparently, those skilled in the art should understand that each module or each operation of the present disclosure can be implemented by a general computing device. They can be centralized on a single computing device or distributed on a network composed of multiple computing devices. They can be implemented by program codes executable by computing devices, so as to be stored in a storage device and executed by computing devices. In some cases, the illustrated or described operations can be executed in an order different from that specified herein, or each module can be fabricated into individual integrated circuit modules, or multiple modules or operations can be fabricated into a single integrated circuit module. The present disclosure is not limited to any specific combination of hardware and software.

The foregoing descriptions are merely exemplary embodiments of the present disclosure and are not intended to limit the present disclosure. Various modifications and variations can be made by those skilled in the art. Any modification, equivalent replacement and improvement made within the principle scope of the present disclosure shall fall within the protection scope of the present disclosure.

## Claims

1. A rate adaptation method, comprising:
acquiring a 256B/257B format data stream; and
performing rate adaptation on the 256B/257B format data stream by inserting or deleting 257b idle blocks.

2. The rate adaptation method according to claim 1, wherein performing rate adaptation on the 256B/257B format data stream by inserting or deleting 257b idle blocks comprises:
inserting at least one 257b idle block after a 257b terminate block or a 257b idle block in the 256B/257B format data stream; or
deleting at least one 257b idle block from the 256B/257B format data stream.

3. The rate adaptation method according to claim 2, wherein
the 257b idle block is transcoded from four 66b idle control blocks;
the 257b terminate block is transcoded from a first number of 66b data blocks, one 66b terminate control block, and a second number of 66b idle control blocks, wherein the first number and the second number are greater than or equal to zero, and a sum of the first number and the second number is equal to 3.

4. The rate adaptation method according to claim 2, wherein before performing rate adaptation on the 256B/257B format data stream by inserting or deleting 257b idle blocks, the rate adaptation method further comprises:
identifying 257b idle blocks in the 256B/257B format data stream based on a first pattern;
wherein the first pattern comprises: the 1st bit being 0, the 2nd to 5th bits being 0000, and a first preset pattern;
wherein the first preset pattern comprises at least one of:
the 6th to 9th bits being 0111, and the 10th to 65th bits all being 0; or
the 6th to 13th bits being 01110000.

5. The rate adaptation method according to claim 2, wherein before performing rate adaptation on the 256B/257B format data stream by inserting or deleting 257b idle blocks, the rate adaptation method further comprises:
identifying the 257b terminate block in the 256B/257B format data stream based on a second pattern;
wherein the second pattern comprises at least one of:
the 1st bit being 0, the 2nd to 5th bits being 0000, and the 6th to 9th bits being a preset type;
the 1st bit being 0, and the 2nd to 5th bits being 1000 or 1110; or
the 1st bit being 0, the 2nd to 5th bits being 1100, and the 202nd to 257th bits all being 0.

6. The rate adaptation method according to claim 1, wherein the 256B/257B format data stream comprises multiple 257b blocks, and the multiple 257b blocks further comprise a 257b start block, wherein the 257b start block is transcoded from one 66b start control block and three 66b data blocks.

7. The rate adaptation method according to claim 1, wherein the 256B/257B format data stream comprises multiple 257b blocks, and the multiple 257b blocks further comprise one or more 257b connect blocks, wherein each 257b connect block is transcoded from one 66b terminate control block, one 66b start control block, and two 66b data blocks, and the 66b terminate control block is located before the 66b start control block.

8. The rate adaptation method according to claim 1, wherein acquiring the 256B/257B format data stream comprises:
performing 64B/66B encoding on Ethernet Media Access Control, MAC, packets to obtain a first 64B/66B format data stream, and performing 256B/257B transcoding on the first 64B/66B format data stream to obtain the 256B/257B format data stream.

9. The rate adaptation method according to claim 1, wherein acquiring the 256B/257B format data stream comprises: receiving the 256B/257B format data stream sent by a previous node, wherein the 256B/257B format data stream is formed by performing 64B/66B encoding and then 256B/257B transcoding on Ethernet Media Access Control, MAC, packets.

10. The rate adaptation method according to claim 8, wherein when performing 64B/66B encoding on the Ethernet MAC packets, Inter-Packet Gap, IPG, bytes in the Ethernet MAC packets are not encoded into 66b idle control blocks, wherein the first 64B/66B format data stream comprises 66b start control blocks, 66b data blocks, and 66b terminate control blocks, and the first 64B/66B format data stream does not comprise the 66b idle control blocks.

11. The rate adaptation method according to claim 8, wherein performing 256B/257B transcoding on the first 64B/66B format data stream to obtain the 256B/257B format data stream comprises: transcoding a 66b terminate control block of a current Ethernet MAC packet and a 66b start control block of a next Ethernet MAC packet in the first 64B/66B format data stream into one 257b connect block, wherein the 257b connect block does not comprise a 66b idle control block.

12. The rate adaptation method according to claim 8, wherein performing 256B/257B transcoding on the first 64B/66B format data stream to obtain the 256B/257B format data stream comprises:
in a case where the number of remaining 66b blocks of a current Ethernet MAC packet in the first 64B/66B format data stream is less than 4 and a next Ethernet MAC packet is not received, inserting at least one 66b idle control block after a 66b terminate control block corresponding to the current Ethernet MAC packet, and then performing 256B/257B transcoding.

13. The rate adaptation method according to claim 8, wherein performing 256B/257B transcoding on the first 64B/66B format data stream to obtain the 256B/257B format data stream further comprises:
in a case where a next Ethernet MAC packet is not received within a preset first time threshold after transcoding of a current Ethernet MAC packet in the first 64B/66B format data stream is completed, inserting a 257b idle block into the 256B/257B format data stream, wherein the 257b idle block is transcoded from four 66b idle control blocks.

14. The rate adaptation method according to claim 9, wherein receiving the 256B/257B format data stream sent by the previous node comprises:
receiving a data stream sent by the previous node, wherein the data stream is obtained by performing Forward Error Correction, FEC, encoding on the 256B/257B format data stream;
performing FEC decoding on the data stream to obtain the 256B/257B format data stream; and
in a case where an uncorrectable FEC error occurs, replacing all 257b blocks within a corresponding FEC codeword in the 256B/257B format data stream with 257b error blocks.

15. The rate adaptation method according to claim 14, wherein
each 257b error block is transcoded from four 66b error control blocks;
the 257b error block is identified based on a preset third pattern, wherein the third pattern comprises: the 1st bit being 0, the 2nd to 5th bits being 0000, and a second preset pattern;
wherein the second preset pattern comprises at least one of:
the 6th to 9th bits being 0111, and the 10th to 65th bits being eight segments of 0111100; or
the 6th to 13th bits being 01110111.

16. The rate adaptation method according to claim 1, wherein in a case where a current node is an intermediate node supporting switching based on 257b blocks, performing rate adaptation on the 256B/257B format data stream by inserting or deleting 257b idle blocks comprises:
performing switching on the 256B/257B format data stream based on the 257b blocks to obtain a switched 256B/257B format data stream; and
performing rate adaptation on the switched 256B/257B format data stream by inserting or deleting 257b idle blocks.

17. The rate adaptation method according to claim 1, wherein in a case where a current node is an intermediate node supporting switching based on 66b blocks, performing rate adaptation on the 256B/257B format data stream by inserting or deleting 257b idle blocks comprises:
transcoding the 256B/257B format data stream to obtain a second 64B/66B format data stream, wherein the second 64B/66B format data stream comprises one or more 66b idle control blocks;
performing switching on the second 64B/66B format data stream based on the 66b blocks to obtain a switched second 64B/66B format data stream;
performing rate adaptation on the switched second 64B/66B format data stream by inserting or deleting at least one 66b idle control block to obtain a rate-adapted second 64B/66B format data stream; and
transcoding the rate-adapted second 64B/66B format data stream into the 256B/257B format, and performing shifting, inserting, or deleting on at least one 66b idle control block in the rate-adapted second 64B/66B format data stream during the transcoding to obtain a rate-adapted 256B/257B format data stream in the 256B/257B format, wherein types of 257b blocks in the rate-adapted 256B/257B format data stream are consistent with types of 257b blocks in the 256B/257B format data stream.

18. The rate adaptation method according to claim 1, wherein in a case where a current node is an intermediate node supporting switching based on 66b blocks, performing rate adaptation on the 256B/257B format data stream by inserting or deleting 257b idle blocks comprises:
deleting part of 257b idle blocks in the 256B/257B format data stream according to a preset proportional coefficient to obtain a rate-reduced 256B/257B format data stream;
transcoding the rate-reduced 256B/257B format data stream to obtain a second 64B/66B format data stream, wherein the second 64B/66B format data stream comprises one or more 66b idle control blocks;
performing switching on the second 64B/66B format data stream based on the 66b blocks to obtain a switched second 64B/66B format data stream;
transcoding the switched second 64B/66B format data stream into the 256B/257B format to obtain a switched 256B/257B format data stream; and
performing rate adaptation on the switched 256B/257B format data stream by inserting or deleting 257b idle blocks.

19. A node, comprising:
an acquiring module, configured to acquire a 256B/257B format data stream; and
a rate adaptation module, configured to perform rate adaptation on the 256B/257B format data stream by inserting or deleting 257b idle blocks.

20. A computer-readable storage medium, wherein a computer program is stored in the computer-readable storage medium, and the computer program, when executed by a processor, causes the processor to perform the rate adaptation method according to any one of claims 1 to 18.

21. An electronic device, comprising a memory and a processor, wherein a computer program is stored in the memory, and the processor is configured to run the computer program to perform the rate adaptation method according to any one of claims 1 to 18.
